(19) Europäisches Patentamt
European Patent Office
Office européen des brevets

(11) **EP 4 473 375 B1**

(12) **EUROPÄISCHE PATENTSCHRIFT**

(45) Veröffentlichungstag und Bekanntmachung des Hinweises auf die Patenterteilung:
**11.03.2026 Patentblatt 2026/11**

(21) Anmeldenummer: **23702307.2**

(22) Anmeldetag: **26.01.2023**

(51) Internationale Patentklassifikation (IPC):
**G05D 23/19** (2006.01)   **B01L 7/00** (2006.01)

(52) Gemeinsame Patentklassifikation (CPC):
**G05D 23/1917; G05D 23/1931;** B01L 7/52

(86) Internationale Anmeldenummer:
**PCT/EP2023/051883**

(87) Internationale Veröffentlichungsnummer:
**WO 2023/148074 (10.08.2023 Gazette 2023/32)**

(54) **VORRICHTUNG UND COMPUTERGESTÜTZTES VERFAHREN ZUM BESTIMMEN EINES ANSTEUERUNGSPROTOKOLLS FÜR EIN MIKROFLUIDISCHES SYSTEM**

DEVICE AND COMPUTER-SUPPORTED METHOD FOR DETERMINING A CONTROL PROTOCOL FOR A MICROFLUIDIC SYSTEM

DISPOSITIF ET PROCÉDÉ ASSISTÉ PAR ORDINATEUR POUR DÉTERMINER UN PROTOCOLE DE COMMANDE POUR UN SYSTÈME MICROFLUIDIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **03.02.2022 DE 102022201124**
**25.01.2023 DE 102023200557**

(43) Veröffentlichungstag der Anmeldung:
**11.12.2024 Patentblatt 2024/50**

(73) Patentinhaber: **Robert Bosch GmbH**
**70442 Stuttgart (DE)**

(72) Erfinder:
• **LIPPERT, Anja**
**73033 Goeppingen (DE)**
• **DOERR, Aaron**
**74321 Bietigheim-Bissingen (DE)**

(56) Entgegenhaltungen:
**US-A1- 2020 116 398**

• **ZOU Q ET AL: "Micro-assembled multi-chamber thermal cycler for low-cost reaction chip thermal multiplexing", SENSORS AND ACTUATORS A: PHYSICAL, ELSEVIER BV, NL, vol. 102, no. 1-2, 1 December 2002 (2002-12-01), pages 114 - 121, XP004393667, ISSN: 0924-4247, DOI: 10.1016/ S0924-4247(02)00384-9**

## Beschreibung

Stand der Technik

Die Beschreibung geht aus von einem Verfahren zum Bestimmen eines Ansteuerungsprotokolls für ein mikrofluidisches System. Mikrofluidische Systeme erlauben eine dezentrale Analyse von Patientenproben mittels moderner molekulardiagnostischer Methoden, beispielsweise für die Durchführung eines PCR-Tests zum Nachweis von Krankheitserregern. Für eine hochzuverlässige und vollautomatisierte Durchführung biochemischer Prozessabläufe und die gezielte thermische Manipulation von Probenflüssigkeiten in derartigen Systemen ist im Allgemeinen sowohl eine geeignete Auslegung der Strukturen als auch eine geeignete Durchführung der Prozessschritte notwendig, um die gewünschten Funktionalitäten sicherzustellen.

Aus dem Dokument US 2020/116398 A1 ist ein Verfahren zur Steuerung von Termperaturen in einem System zur Nukleinsäureanalyse basierend auf einem thermischen Modell bekannt. Die Publikation ZOU Q ET AL: "Micro-assembled multi-chamber thermal cycler for low-cost reaction chip thermal multiplexing", SENSORS AND ACTUATORS A: PHYSICAL, ELSEVIER BV, NL, Bd. 102, Nr. 1-2, 1. Dezember 2002 (2002-12-01), Seiten 114-121, XP004393667, ISSN: 0924-4247, DOI: 10.1016/S0924-4247(02)00384-9 beschreibt eine Optimierung eines thermischen Modells für einen Miniatur-Thermocycler.

Offenbarung der Erfindung

Die gewünschte Funktionalität wird durch den Gegenstand der unabhängigen Ansprüche besonders effizient erreicht.

Gemäß den unabhängigen Ansprüchen wird eine Voraussage für ein Ansteuerungsprotokoll bestimmt, mit welchem ein vorgegebenes zeitliches Temperaturprofil, d.h. eine Zielvorgabe, erreicht wird. Durch die Voraussage werden aufwändige und ansonsten kaum parallel durchführbare experimentelle Iterationen vermieden oder mindestens eingespart. Dadurch sind wesentlich weniger Rechenressourcen erforderlich um das Ansteuerungsprotokoll für eine Ansteuerung mikrofluider Systeme zu bestimmen.

Dies wird durch ein computergestütztes Verfahren zum Bestimmen eines Ansteuerungsprotokolls für ein mikrofluidisches System unter Temperatureinflüssen erreicht, wobei das mikrofluidische System eine erste Kammer für ein Fluid umfasst, wobei das mikrofluidische System ein erstes Heizelement umfasst, das ausgebildet ist, eine Temperatur des Fluids in der ersten Kammer zu beeinflussen, wobei ein mit einem Parametersatz parametrierbares Modell bereitgestellt wird, das ausgebildet ist, einen Einfluss einer ersten Temperatur und einen Einfluss einer zweiten Temperatur auf einen Temperaturverlauf im Fluid im mikrofluidischen System zu bestimmen, wenn dieses gemäß des Ansteuerungsprotokolls angesteuert wird, wobei eine Zielvorgabe für den Temperaturverlauf bereitgestellt wird, wobei der Parametersatz bestimmt wird, bei dem ein mit dem Modell berechneter Temperaturverlauf die Zielvorgabe erfüllt, wobei der Parametersatz wenigstens einen Parameter des Ansteuerungsprotokolls umfasst, der die erste Temperatur und/oder die zweite Temperatur vorgibt. Dadurch kann die Temperierung in einer Kammer zwischen zwei Temperaturen im Zyklus gewechselt werden. Es kann vorgesehen sein, dass das Ansteuerungsprotokoll vorsieht, eine dritte Temperatur oder mehr als drei Temperaturen im Zyklus vorzugeben.

Das mikrofluidische System umfasst bevorzugt ein Analysegerät, in welches eine Kartusche zur Analyse des Fluids in der Kartusche aufgenommen werden kann, wobei die Kartusche Teil des mikrofluidischen Systems sein und dabei die oben beschriebene erste Kammer aufweisen kann, während das Analysegerät vorzugsweise das erste Heizelement umfasst. Dabei kann die Kartusche gemäß besonderer Ausgestaltung weitere passive Teile wie Kanäle, Kammern und ansteuerbare (Membran-)Ventile und Pumpkammern aufweisen, während das Analysegerät aktive Komponenten zur Prozessierung der Kartusche, beispielsweise Heizer, Pumpen, Drucklufttanks und elektronische Komponenten wie Prozessor und Speicher, aufweisen kann. Somit ist das mit dem erfindungsgemäßen Verfahren bestimmte Ansteuerungsprotokoll vorzugsweise ausgebildet, das Analysegerät für eine Prozessierung der Kartusche anzusteuern. Das mikrofluidische System kann beispielsweise zur Durchführung von molekularbiologischen Tests, insbesondere für eine isotherme oder auf Polymerase-Kettenreaktion basierende Vervielfältigung von Nukleinsäureabschnitten eingerichtet sein, beispielsweise für die Durchführung eines (PCR-)Tests zum Nachweis von Krankheitserregern.

Vorzugsweise umfasst das mikrofluidische System, vorzugsweise die Kartusche, eine zweite Kammer für das Fluid, wobei das mikrofluidische System, vorzugsweise das Analysegerät, ein zweites Heizelement umfasst, das ausgebildet ist, die Temperatur des Fluids in der zweiten Kammer zu beeinflussen, wobei das Modell ausgebildet ist, einen Einfluss der ersten Temperatur des ersten Heizelements und einen Einfluss der zweiten Temperatur des zweiten Heizelements auf den Temperaturverlauf im Fluid im mikrofluidischen System zu bestimmen. Dadurch wird die Probe in zwei vorzugsweise unterschiedlich temperierten Kammern ausgewertet.

Der Temperaturverlauf kann durch eine Wahl der Kammer, eine Wahl der Temperatur in der Kammer und eine Verweilzeit des Fluids in der Kammer beeinflusst werden. Die Zeit, während der sich das Fluid in einer der Kammern befindet ist vergleichsweise gering gegenüber der Zeit für die Bewegung des Fluids von einer Kammer in die andere. Die folgenden Parameter eignen sich besonders gut zur Simulation der Temperatureinflüsse, die unterschiedliche Ansteuerungsprotokolle auf das Fluid bewirken.

Beispielsweise wird wenigstens ein Parameter des Parametersatzes bestimmt, der im Ansteuerungsprotokoll eine Reihenfolge vorgibt, in welcher die erste Kammer und/oder die zweite Kammer zum Beeinflussen der Temperatur des Fluids benutzt werden. Diese Parameter geben die jeweils zu verwendenden Kammern an.

Beispielsweise wird wenigstens ein Parameter des Parametersatzes bestimmt, der im Ansteuerungsprotokoll eine Verweilzeit des Fluids in der ersten Kammer und/oder eine Verweilzeit des Fluids in der zweiten Kammer vorgibt.

Die Simulation kann vorsehen, dass eine Mehrzahl Kandidaten für das Ansteuerungsprotokoll bestimmt wird, wobei der Kandidat als das Ansteuerungsprotokoll aus den Kandidaten ausgewählt wird, mit dem die Zielvorgabe schneller erreicht wird als mit wenigstens einem der anderen Kandidaten. Beispielsweise wird der Kandidat gewählt, mit dem die Zielvorgabe am schnellsten erreicht wird. Hierdurch wird ein Optimum in Bezug auf die Dauer des Ablaufs wesentlich zuverlässiger und schneller gefunden als auf experimentellem Weg.

Sofern eine Geometrie des mikrofluidischen Systems mit veränderbarer Geometrie z.B. wenigstens einer Kammer änderbar ist, ist vorgesehen, dass wenigstens ein Parameter des Parametersatzes bestimmt wird, der im Ansteuerungsprotokoll die Geometrie der wenigstens einen Kammer des mikrofluidischen Systems mit veränderbarer Geometrie vorgibt. Unter einer veränderbaren Geometrie kann insbesondere eine veränderbare Geometrie einer Kammer oder eines Kanals verstanden werden, beispielsweise durch eine zumindest teilweise bewegliche Wand, zum Beispiel in Form einer dehnbaren Membran, oder ein beweglicher Kolben. Dadurch kann das Volumen der Kammer bzw. des Kanals verändert werden und/oder ein Teil von in der Kammer bzw. in dem Kanal befindlichen Fluid bewegt werden, was wiederum Einfluss auf die thermischen Gegebenheiten haben kann wie beispielsweise eine Änderung der Wärmekapazität oder des thermischen Widerstandsin der Kammer bzw. in dem Kanal.

Sofern eine Position wenigstens eines Heizelementes des mikrofluidischen Systems mit veränderbarer Position änderbar ist, ist vorgesehen, dass wenigstens ein Parameter des Parametersatzes bestimmt wird, der im Ansteuerungsprotokoll die Position wenigstens eines Heizelementes des mikrofluidischen Systems mit veränderbarer Position vorgibt.

Es kann vorgesehen sein, dass wenigstens ein Parameter des Parametersatzes bestimmt wird, mit dem der Temperatureinfluss im mikrofluidischen Systems bestimmt wird. Das bedeutet, ein Systemverhalten des mikrofluidischen Systems wird mitgelernt.

Zum Ansteuern des mikrofluidischen Systems mit dem Ansteuerungsprotokoll, wird dieses mit dem Verfahren bestimmt und das mikrofluidische System mit dem Ansteuerungsprotokoll angesteuert. Somit kann vorteilhafterweise zunächst das Ansteuerungsprotokoll bestimmt und anschließend das mikrofluidische System mit diesem Ansteuerungsprotokoll betrieben werden. Die Bestimmung des Ansteuerungsprotokolls kann dabei vorteilhafterweise vorab, also "offline", insbesondere durch eine andere Vorrichtung erfolgen und anschließend das mikrofluidische System, vorzugsweise das Analysegerät, mit dem Ansteuerungsprotokoll betrieben werden.

Das mikrofluidische System wird beispielsweise mit dem Ansteuerungsprotokoll angesteuert, die erste Temperatur am ersten Heizelement einzustellen und/oder die zweite Temperatur am zweiten Heizelement einzustellen.

Das mikrofluidische System wird beispielsweise mit dem Ansteuerungsprotokoll angesteuert, das Fluid pneumatisch in wenigstens eine Kammer zu drücken oder zu saugen.

Das mikrofluidische System wird beispielsweise mit dem Ansteuerungsprotokoll angesteuert, die Geometrie wenigstens einer Kammer zu verändern und/oder die Position und/oder die Temperatur wenigstens eines Heizelementes zu verändern.

Eine Vorrichtung, mit der derselbe Vorteil erreicht wird, umfasst wenigstens einen Prozessor und wenigstens einen Speicher, die ausgebildet sind, das Verfahren auszuführen. Beispielsweise kann es sich bei der Vorrichtung um einen entsprechend programmierten Computer oder Teil einer Cloud-Computing-Lösung handeln.

Die Vorrichtung kann in besonderer Ausgestaltung dem mikrofluidischen System entsprechen, insbesondere dem oben beschriebenen Analysegerät. Gemäß dieser Variante können sowohl die erfindungsgemäße Bestimmung des Ansteuerungsprotokolls als auch die Ausführung des Ansteuerungsprotokolls durch dieselbe Vorrichtung oder zumindest durch denselben Typ von Vorrichtung erfolgen.

Ein Computerprogramm, mit dem derselbe Vorteil erreicht wird, umfasst computerlesbare Instruktionen, bei deren Ausführung durch einen Computer das Verfahren abläuft.

Weitere vorteilhafte Ausführungsformen sind der folgenden Beschreibung und der Zeichnung entnehmbar. In der Zeichnung zeigt:

Fig. 1    eine schematische Darstellung eines mikrofluidischen Systems,
Fig. 2    eine schematische Darstellung einer Vorrichtung,

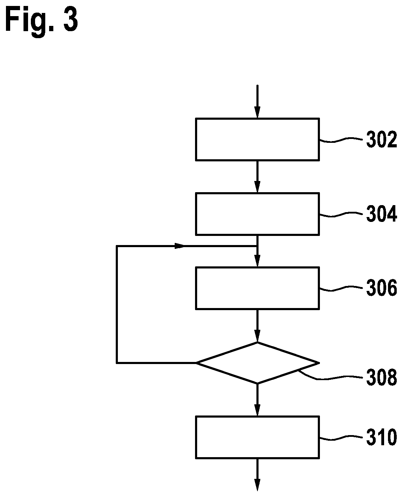

Fig. 3    ein Flussdiagramm mit Schritten in einem Verfahren zum Bestimmen eines Ansteuerungsprotokolls für das mikrofluidische System,

Fig. 4    ein Temperaturverlauf im Fluid,

Fig. 5    eine beispielhafte Ablaufsteuerung,

Fig. 6    ein Verlauf einer Fluidtemperatur in einer Beispielrechnung,

Fig. 7    ein Verlauf von Temperaturen und Verweildauern des Fluids in der Beispielrechnung.

In mikrofluidischen Strukturen werden in der Regel sequentielle Prozessschritte durchgeführt, bei denen ein Fluid, das Probenfluid, in die mikrofluidische Struktur eingebracht und aufbereitet wird und einen vordefinierten zeitlichen Temperaturzyklus oder mehrere dieser Temperaturzyklen durchläuft. Um eine vorgeschriebene sequentielle Temperaturreihenfolge zeiteffizient zu durchlaufen, hat sich der Einsatz multipler Kammern, d.h. Verweilkammern, etabliert, welche auf unterschiedlichen Temperarniveaus liegen. Mikrofluidische Strukturen werden z.B. als Kartusche mit mehreren Kammern und unter dem Einfluss mehrerer Heizelemente, d.h. Heizer, hergestellt.

Beim Einsatz von Heizelementen und mehreren Kammern ist eine sequentielle Prozessführung mit einem Zyklusablauf möglich. Dieser soll möglichst effizient sein, d.h. z.B. eine Ablauflänge des Zyklus minimieren, und einen optimalen biochemischen Reaktionsvorgang sicherstellen.

Händisches Experimentieren ist zeit- und kostenintensiv und verspricht kein Optimum. Durch die im Folgenden beschriebene Vorgehensweise wird eine Voraussage eines Ansteuerungsprotokolls für ein gegebenes zeitliches Temperaturprofil ohne aufwändige und kaum parallel durchführbare experimentelle Iterationen bereitgestellt und möglichst ein Optimum in Bezug auf die Ablauflänge, d.h. eine Dauer des Ablaufs, wesentlich zuverlässiger und schneller gefunden werden als auf experimentellem Weg.

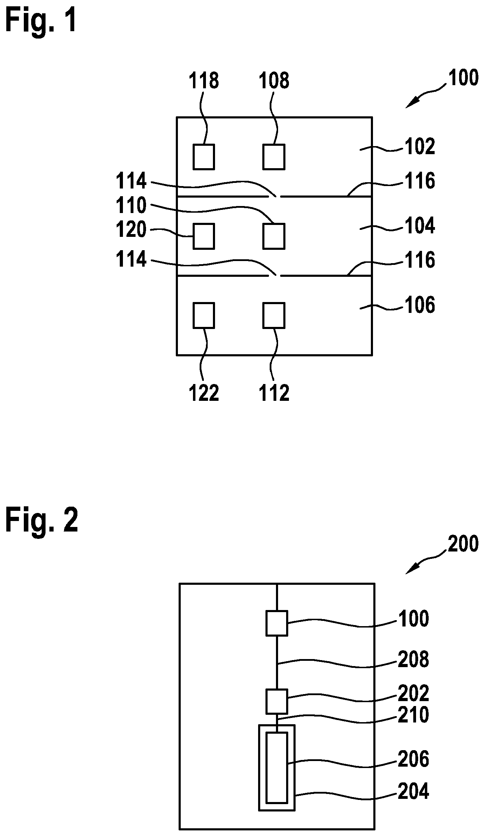

In Figur 1 ist ein mikrofluidisches System 100 schematisch dargestellt.

Das mikrofluidische System 100 umfasst eine erste Kammer 102 und eine zweite Kammer 104. Es kann vorgesehen sein, dass das mikrofluidische System mehr als zwei Kammern umfasst. Das in Figur 1 beispielhaft dargestellte mikrofluidische System umfasst eine dritte Kammer 106. Der im Folgenden beschriebene Ansatz funktioniert bei einer Kammer, bei zwei Kammern und auch bei mehr als zwei Kammern, insbesondere bei drei Kammern wie im Ausführungsbeispiel beschrieben.

Das mikrofluidische System 100 umfasst ein erstes Heizelement 108, das ausgebildet ist, eine Temperatur des Fluids in der ersten Kammer 102 zu beeinflussen. Das mikrofluidische System 100 umfasst ein zweites Heizelement 110, das ausgebildet ist, die Temperatur des Fluids in der zweiten Kammer 104 zu beeinflussen. Es kann vorgesehen sein, dass das mikrofluidische System mehr als zwei Heizelemente umfasst. Das in Figur 1 beispielhaft dargestellte mikrofluidische System umfasst ein drittes Heizelement 112. Gemäß bevorzugter Ausgestaltung umfasst das mikrofluidische System 100 ein Analysegerät, in welches eine Kartusche zur Analyse des Fluids in der Kartusche aufgenommen werden kann, wie zum Beispiel in DE 10 2016 222 075 A1 oder DE 10 2016 222 072 A1 beschrieben. Dabei kann das Analysegerät die Heizelemente 108, 110, 112 den Prozessor und den Speicher umfassen, während die Kartusche vorzugsweise als passives Teil zur Prozessierung des Fluids ausgebildet ist und wobei bei der Prozessierung die Heizelemente 108, 110, 112 mit den Kammern 102, 104, 106 in Berührung gebracht werden können. Beispielsweise ist das vorgestellte Verfahren Teil eines Verfahrens zur Durchführung einer Vervielfältigung von Nukleinsäureabschnitten, beispielsweise ein Verfahren zur Durchführung eines PCR-Tests, zum Beispiel für einen Nachweis eines Krankheitserregers in einer Probe.

Zwischen je zwei der Kammern ist eine Fluidöffnung 114 in einer diese Kammern voneinander trennenden Wand 116 angeordnet. Ein erster Aktor 118 ist im Beispiel ausgebildet, Fluid in die erste Kammer 102 zu saugen oder aus dieser herauszudrücken. Ein zweiter Aktor 120 ist im Beispiel ausgebildet, Fluid in die zweite Kammer 104 zu saugen oder aus dieser herauszudrücken. Ein dritter Aktor 122 ist im Beispiel ausgebildet, Fluid in die dritte Kammer 106 zu saugen oder aus dieser herauszudrücken. Dabei können ein oder mehrere der Aktoren 118, 120, 122 eingerichtet sein, die Geometrie der ersten Kammer 102 oder zweiten Kammer 104 für das Ansaugen oder Herausdrücken zur verändern, beispielsweise durch Aktuierung einer dehnbaren Membran, wobei die Membran Teil einer der die Kammern 102, 104 begrenzenden Wände sein kann.

In Figur 2 ist eine Vorrichtung 200 schematisch dargestellt. Die Vorrichtung 200 umfasst das mikrofluidische System 100. Die Vorrichtung 200 umfasst wenigstens einen Prozessor 202 und wenigstens einen Speicher 204. Im wenigstens einen Speicher 204 ist ein Modell 206 bereitgestellt. Das Modell 206 ist durch einen Parametersatz definiert. Im Beispiel ist der Parametersatz im Speicher 204 gespeichert. Gemäß besonderer Ausgestaltung kann die Vorrichtung 200 das mikrofluidische System 100 umfassen, oder dazu ausgebildet sein, dieses anzusteuern. Alternativ handelt es sich bei der Vorrichtung 200 wie oben beschrieben um einen entsprechend programmierten Rechner, welcher das Ansteuerungsprotokoll bestimmt, welches anschließend für den Betrieb des mikrofluidischen Systems 100 verwendet wird. Eine Ansteuerverbindung 208 verbindet im Beispiel zumindest zeitweise den wenigstens einen Prozessor 202 mit dem mikrofluidischen System 100. Der wenigstens eine Prozessor 202 und der wenigstens eine Speicher 204 kommunizieren im Beispiel über eine Datenverbindung 210.

Die Vorrichtung 200 ist ausgebildet, das im Folgenden beschriebene Verfahren auszuführen. Beispielsweise ist ein Computerprogramm vorgesehen, welches computerlesbare Instruktionen umfasst, bei deren Ausführung durch den wenigstens einen Prozessor 202, d.h. durch einen Computer, das Verfahren abläuft.

In der folgenden Beschreibung wird ein Verfahren am Beispiel der ersten Kammer 102 und der zweiten Kammer 104 beschrieben. Das Verfahren ist auf mikrofluidische Systeme mit mehr als zwei Kammern anwendbar. Das Verfahren ist auf mikrofluidische Systeme mit mehr als zwei Heizelementen anwendbar.

Das Verfahren ist zum Bestimmen eines Ansteuerungsprotokolls für das mikrofluidische System 100 unter Temperatureinflüssen ausgebildet. Mit dem Modell 206 werden die durch ein Ausführen des Ansteuerungsprotokolls ausgelösten Temperatureinflüsse auf die Temperatur des Fluids in den Kammern simuliert, um das Ansteuerungsprotokoll zu bestimmen.

Das Modell 206 unterstützt eine Applikation insbesondere neuer biochemischer Assays, indem ein physikalisch modellierter Zusammenhang zwischen einer Ansteuerung des mikrofluidischen Systems 100 und einer biochemisch relevanten Fluidtemperatur quantitativ ausgenutzt wird, um ein oder mehrere Ansteuerungsprotokolle zu bestimmen. Diese quantitative, rechnerbasierte Lösung verwendet in einem Beispiel ein Optimierungsverfahren. Dadurch wird schneller eine insbesondere bessere Lösung gefunden, als dies in experimentellen Iteration möglich ist.

Ein Grund hierfür ist, dass sowohl bei stochastischen Ansätzen, wie z.B. RandomSearch oder Bayessche Optimierung, als auch bei regelungstechnischen Ansätzen, wie z.B. modellprädiktiver Regelung, nicht-intuitive und bisweilen komplexe Parameterkombinationen ausprobiert werden.

Ein weiterer Grund hierfür ist, eine Parallelisierbarkeit des Verfahrens, d.h. ein Ausprobieren vieler Parametersätze zur gleichen Zeit, wodurch pro Zeit mehr Tests möglich sind. Vorzugsweise wird das Verfahren für mehrere Modelle 206 im Wesentlichen parallel ausgeführt. Im Folgenden wird das Vorgehen für ein Modell 206 beschrieben.

Das mikrofluidische System 100 umfasst wie oben beschrieben im Beispiel eine Kartusche, in der das Fluid eine Probe darstellt.

Ein derartiges rechnerbasiertes Verfahren benötigt keine geräteseitige Kapazität, die für andere Entwicklungsaufgaben benötigt wird. Z.B. wird kein Analyser benötigt.

Für einen korrekten biochemischen Ablauf in der Kartusche muss ein vorgeschriebener zeitlicher Temperaturverlauf in der Probe erfolgen. Dafür wird mit dem Verfahren automatisiert das korrekte Ansteuerungsprotokoll bestimmt. Im Beispiel wird das Ansteuerprotokoll durch eine intelligente iterative Lösung eines inversen Problems bestimmt. Im Beispiel ist ein mit dem Ansteuerungsprotokoll zu erreichende Ergebnis, d.h. eine Zielvorgabe, bekannt und die dafür nötige Ansteuerung, d.h. das Ansteuerungsprotokoll wird bestimmt.

In einem Schritt 302 wird das mit dem Parametersatz parametrierbare Modell 206 insbesondere mit einem initialen Parametersatz parametriert bereitgestellt. Das Modell 206 ist ausgebildet, ein Ansteuerungsprotokoll und einen Einfluss einer ersten Temperatur des ersten Heizelements 108 und einen Einfluss einer zweiten Temperatur des zweiten Heizelements 110 auf einen Temperaturverlauf im Fluid im mikrofluidischen System 100, d.h. im Beispiel der Kartusche, zu bestimmen, wenn dieses gemäß dem Ansteuerungsprotokoll angesteuert wird.

In einem Schritt 304 wird die Zielvorgabe für den Temperaturverlauf bereitgestellt. Es kann vorgesehen sein, dass das Verfahren für verschiedene Zielvorgaben wiederholt wird. Die Zielvorgabe wird z.B. anhand von Validierungsdaten kontinuierlich verbessert oder an neue Kartuschendesigns oder Assaytypen angepasst.

In einem Schritt 306 wird der Parametersatz bestimmt, bei dem ein mit dem Modell 206 berechneter Temperaturverlauf die Zielvorgabe erfüllt.

Der Parametersatz umfasst wenigstens einen Parameter des Ansteuerungsprotokolls, der die erste Temperatur und die zweite Temperatur vorgibt. Sofern andere Heizelemente vorgesehen oder verwendet werden umfasst der Parametersatz im Beispiel ebenfalls jeweilige Parameter für diese. Es können auch andere Parameter bestimmt werden.

Beispielsweise wird ein Parameter des Ansteuerungsprotokolls bestimmt, der im Parametersatz eine Reihenfolge vorgibt, in welcher die erste Kammer 102 und die zweite Kammer 104 zum Beeinflussen der Temperatur des Fluids benutzt werden. Sofern andere Kammern vorgesehen oder verwendet werden, umfasst der Parametersatz im Beispiel ebenfalls jeweilige Parameter für diese.

Beispielsweise wird ein Parameter des Ansteuerungsprotokolls bestimmt, der im Parametersatz eine Verweilzeit des Fluids in der ersten Kammer 102 und eine Verweilzeit des Fluids in der zweiten Kammer 104 vorgibt.

Erfindungsgemäss wird ein Parameter des Ansteuerungsprotokolls bestimmt, der im Parametersatz eine Geometrie wenigstens einer der Kammer des mikrofluidischen Systems 100 mit veränderbarer Geometrie und/oder wenigstens eine Position wenigstens eines der Heizelemente des mikrofluidischen Systems mit veränderbarer Position vorgibt.

Optional ist vorgesehen, dass eine Mehrzahl Kandidaten für das Ansteuerungsprotokoll bestimmt wird.

Es kann zudem vorgesehen sein, wenigstens einen Parameter des Parametersatzes zu bestimmen, mit dem der Temperatureinfluss im mikrofluidischen Systems 100 bestimmt wird. Beispielsweise wird ein Parameter des Modell 206 bestimmt, der eine Differenzialgleichung oder ein Gewicht eines künstlichen neuronalen Netzwerks, oder einen Erwartungswert oder eine Varianz eines statistischen Prozesses, insbesondere eines Gaußprozesses definiert.

Beispielsweise wird durch Wiederholen des Schrittes 306 ein Mehrzahl Ansteuerungsprotokolle als Kandidat bestimmt, und in einem optionalen Schritt 308 der Kandidat als das Ansteuerungsprotokoll aus den Kandidaten ausgewählt, mit dem die Zielvorgabe schneller erreicht wird als mit wenigstens einem der anderen Kandidaten. In dem im Beispiel dargestellten Ablauf wird nach dem Schritt 308 der Schritt 306 wiederholt. Das Ansteuerungsprotokoll wird in einer ersten Iteration bestimmt und als Kandidat gespeichert. Der jeweils gespeicherte Kandidat wird im Beispiel mit anderen Kandidaten verglichen, die in folgenden Iterationen bestimmt werden. Der in einer jeweiligen Iteration ausgewählte Kandidat wird wiederum gespeichert und zum Vergleich mit einem in der nächsten Iteration bestimmten Kandidaten verwendet.

Es kann vorgesehen sein, dass das Verfahren endet, wenn der optimale Kandidat bestimmt ist. In diesem Fall ist das Verfahren auf die Simulation beschränkt. Das Ansteuerungsprotokoll des optimalen Kandidaten wird in diesem Fall z.B. zur Anwendung im mikrofluidischen System 100 gespeichert.

Optional wird nach dem Schritt 308 das mikrofluidische System 100 in einem Schritt 310 mit diesem Ansteuerungsprotokoll angesteuert. Beispielsweise wird ein Ansteuerungsprotokoll für das mikrofluidische System 100 mit dem beschriebenen Verfahren bestimmt und das mikrofluidische System 100 mit dem Ansteuerungsprotokoll angesteuert.

Beispielsweise wird das mikrofluidische System 100 mit dem Ansteuerungsprotokoll dazu angesteuert, die erste Temperatur am ersten Heizelement 108 einzustellen. Beispielsweise wird das mikrofluidische System 100 mit dem Ansteuerungsprotokoll dazu angesteuert, die zweite Temperatur am zweiten Heizelement 110 einzustellen.

Beispielsweise wird das mikrofluidische System 100 mit dem Ansteuerungsprotokoll angesteuert, das Fluid insbesondere mit dem ersten Aktor 118 und/oder dem zweiten Aktor 120 pneumatisch in die erste Kammer zu drücken oder zu saugen. Das Ansteuerungsprotokoll gibt im Beispiel die Zeiträume vor, die das Fluid in der ersten Kammer 102 verweilt.

Beispielsweise wird das mikrofluidische System 100 mit dem Ansteuerungsprotokoll angesteuert, das Fluid insbesondere mit dem ersten Aktor 118 und/oder dem zweiten Aktor 120 pneumatisch in die zweite Kammer zu drücken oder zu saugen. Das Ansteuerungsprotokoll gibt im Beispiel die Zeiträume vor, die das Fluid in der zweiten Kammer 102 verweilt.

Das Ansteuerungsprotokoll gibt in einem Beispiel eine Reihenfolge vor, in der sich das Fluid durch diese Kammern bewegt. Es kann vorgesehen sein, dass der Parameter, der die erste Temperatur vorgibt, während der Ansteuerung mit dem Ansteuerungsprotokoll konstant ist. Es kann vorgesehen sein, dass der Parameter, der die erste Temperatur vorgibt, sich während der Ansteuerung mit dem Ansteuerungsprotokoll ändert. Beispielsweise werden für unterschiedliche Zeiträume, in denen sich das Fluid in der ersten Kammer 102 befinden soll, jeweilige erste Temperaturen vorgegeben. Es kann vorgesehen sein, dass der Parameter, der die zweite Temperatur vorgibt, während der Ansteuerung mit dem Ansteuerungsprotokoll konstant ist. Es kann vorgesehen sein, dass der Parameter, der die zweite Temperatur vorgibt, sich während der Ansteuerung mit dem Ansteuerungsprotokoll ändert. Beispielsweise werden für unterschiedliche Zeiträume, in denen sich das Fluid in der zweiten Kammer 104 befinden soll, jeweilige zweite Temperaturen vorgegeben.

Für einen korrekten biochemischen Ablauf im Falle, dass nur die erste Kammer 102 vorgesehen ist, wird eine Ansteuerung des ersten Heizelements 108 mit dem Ansteuerungsprotokoll vorgesehen, das einen Wechsel der Temperierung für den erforderlichen zeitlichen Temperaturverlauf in der Probe mit dem ersten Heizelement 108 einstellt. Sofern zudem eine zwei Kammer vorgesehen ist, wird entsprechend verfahren, wobei ein Wechsel der Temperierung durch Bewegen des Fluids abwechselnd in je eine der beiden Kammern vorgesehen sein kann.

Das mikrofluidische System 100 wird in einem Beispiel mit dem Ansteuerungsprotokoll angesteuert, die Geometrie wenigstens einer der Kammern zu verändern.

Das mikrofluidische System 100 wird in einem Beispiel mit dem Ansteuerungsprotokoll angesteuert, die Position wenigstens eines der Heizelemente zu verändern.

Das Ansteuerungsprotokoll gibt im Beispiel Ansteuerungssignale für die Heizelemente und/oder die Aktoren und/oder die Geometrie und/oder die Position vor. Diese werden beispielsweise von der Vorrichtung 200 bestimmt und zur Ansteuerung des mirkofluidischen Systems 100 an dieses ausgegeben.

Typische biochemische Assays bestimmen die Zielfunktion für das Optimierungsproblem in der folgenden Form: Vorgabe einer initialen Denaturierungstemperatur und zugehöriger Dauer. Vorgabe von Temperaturintervallen und Dauern für n Zyklen aus Denaturierung, Annealing und Elongation, wie zum Beispiel für die Durchführung einer Polymerase-Kettenreaktion erforderlich.

Die folgende Tabelle stellt eine Reihenfolge von Schritten in einem beispielhaften Assay dar.

| Schritt | Temperatur (°C) | Zeit |
|---|---|---|
| Initiale Denaturierung, | 95 | 2min |
| Denaturierung I | 95 | 30sec |
| Annealing I | 63 | 40sec |
| Elongation I | 72 | 15sec |
| Denaturation II | 95 | 12sec |

(fortgesetzt)

| Schritt | Temperatur (°C) | Zeit |
|---|---|---|
| Annealing II | 63 | 12sec |
| Extension II | 72 | 12sec |

Nach der Initialen Denaturierung werden in diesem Beispiel 15 Zyklen I ausgeführt, d.h. Denaturierung I, Annealing I, Elongation I. Anschließend werden in diesem Beispiel 25 Zyklen II ausgeführt, d.h. Denaturierung II, Annealing II, Elongation II.

Im Beispiel sind die Temperaturgrenzen für Denaturierung 94°C - 99°C, für Annealing 62°C - 64°C und für Elongation 71°C - 73°C.

Zum Erreichen der dadurch definierten Zielfunktion wird im Beispiel der folgende Parametersatz in der Simulation variiert, bis wenigstens eine Lösung für das Optimierungsproblem gefunden ist: Temperatur, Auswahl der benutzen Kammern, Verweilzeiten in den ausgewählten Kammern.

Eine zeitliche Abfolge dieser Parameter stellt ein Ansteuerungsprotokoll dar, welches im mikrofluidische System 100, z.B. insbesondere in der Kartusche ablaufen soll. Das Ansteuerungsprotokoll wird beispielsweise direkt in einer Systemsteuerung des mikrofluidischen Systems 100 oder der Kartusche umgesetzt. Die Systemsteuerung ist z.B. die Vorrichtung 200 oder ein separater Mikroprozessor, auf dem das Ansteuerungsprotokolll implementiert ist oder wird.

Ein Parametersatz, der ein Ansteuerungsprotokoll definiert, umfasst konkrete Werte für diese Parameter. Die Variation dieser Parameter erfolgt im Beispiel durch einen geeigneten Algorithmus. Es kann auch vorgesehen sein, dass einzelne oder alle Parameter einem Nutzer über eine Mensch-Maschine-Schnittstelle zur manuellen Veränderung vorgeschlagen werden. Zur Systembeschreibung, also der Vorhersage, des zeitlichen Temperaturverlaufs in der Probe, der sich bei einer Ansteuerung des mikrofluidischen Systems 100 oder der Kartusche durch das Ansteuerungsprotokoll einstellt, wird das Modell 206 verwendet, das mit dem Parametersatz parametriert ist.

Für den initialen Parametersatz werden im Beispiel die Verweildauern und Temperaturen vorgegeben, wobei die Anzahl der Kammern, der Anzahl der verschiedenen Temperaturniveaus des Assays entspricht.

Sofern eine Vorhersage der Fluidtemperatur durch das Modell 206 mit diesen Parametern Abweichungen zur Zielvorgabe zeigt, werden im Beispiel nach Regeln dafür automatische oder manuell empirische Korrekturen vorgenommen. Abweichungen, die z.B. wegen Unterschieden im thermischen Verhalten zwischen Modell 206 und modelliertem mikrofluidischen System 100 oder Zielkartusche entstehen, werden im Beispiel durch Variation von Parametern behoben.

Regeln für die automatische Korrektur oder die empirische Korrektur sind z.B. folgende:

Bei zu kurzen Temperaturintervallen werden z.B. die Verweilzeiten erhöht. Bei nicht Erreichen der Zieltemperaturen werden z.B. die Verweilzeiten erhöht und Änderung der zugehörigen Heizertemperaturen vorgenommen.

Aufgrund der physikalisch bedingten Kopplung zwischen der Fluidtemperatur und den verschiedenen Parametern kann es zu gegenseitiger Kompensation oder Verstärkung von Parametereinflüssen kommen. Für diese werden zusätzliche Korrekturen durchgeführt.

Während mehrerer solcher Iterationen werden die Korrekturen sukzessive geringer, bis eine Konvergenz erreicht ist.

Das Modell 206 kann zumindest eines der folgenden Modelle umfassen:

Es kann vorgesehen sein, dass das Modell 206 ein 3D-Modell umfasst, das ausgebildet ist, die erste Temperatur abhängig vom Ansteuerungsprotokoll und abhängig von einer zeitlich und räumlich diskretisierten Berechnung von Wärme- und Stofftransport im mikrofluidischen System 100 oder in der Kartusche zu bestimmen. Das 3D-Modell repräsentiert dabei vorzugsweise die tatsächliche Struktur des zu modellierenden Teils des mikrofluidischen Systems 100, also insbesondere den Aufbau und die Materialeigenschaften der zu modelliernden Kammern und Heizelemente. Das Ansteuerungsprotokoll geht beispielsweise in die Rand- und Anfangsbedingungen für das 3D-Modell ein. Der Temperaturverlauf ist ein Rechenergebnis, das beim Berechnen des 3D-Modells erhalten wird.

Für das 3D-Modell kann die Enthalpiegleichung (1) räumlich durch Finite Volumen oder Finite Elemente diskretisiert werden, unter der Bedingung, dass die geometrischen Merkmale und physikalischen Gradienten aufgelöst werden. Das gleiche gilt für die zeitliche Diskretisierung, welche es erlauben muss zeitlichen Änderungen im System zu folgen. Hierbei wird die Fouriersche Wärmeleitungsgleichung für das Temperaturfeld T in den Teilvolumina $\Omega_i\backslash\sum_i$ gelöst (unterteilt durch innere Schnittflächen $\Sigma_i$ und jeweils mit Dichte $\rho$, spezifischer Wärmekapazität $c_p$ und Wärmeleitfähigkeit $\lambda$):

$$\partial_t(\rho c_p T) = \nabla \cdot (\lambda \nabla T) \qquad \text{in} \quad \Omega_i\backslash\textstyle\sum_i \qquad\qquad (1)$$

$$\llbracket T \rrbracket = 0 \ \cap \ \ \llbracket \lambda \, \nabla \, T \rrbracket \cdot n_i = 0 \quad \text{auf} \ \ \sum_i \qquad\qquad (2)$$

Es gilt außerdem zu beachten, dass an den physikalischen Domänengrenzen die Stetigkeit der Temperatur und der Wärmeströme gewahrt sein muss (Gleichung (2)). Die Heizertemperaturen werden hierbei als zeitabhängige Dirichletrandbedingungen vorgegeben.

Es kann vorgesehen sein, dass das Modell 206 ein Netzwerkmodell, auch mit den englischen Namen "network model" oder "thermal network model" bezeichnet, umfasst, das ausgebildet ist, die erste Temperatur abhängig vom Ansteuerungsprotokoll durch eine Verknüpfung von relevanten Zuständen zu bestimmen, die durch vereinfachte Gleichungen für Wärme- und Stofftransport im mikrofluidischen System 100 oder in der Kartusche dargestellt werden. Beispielsweise wird eine physikalisch begründete Abstraktion des 3D-Modells als Netzwerkmodell verwendet, wobei gemäß seinem Namen die konkreten Zusammenhänge von Wärmekapazitäten und thermischen Widerständen in Form eines Netzwerks unter Ausnutzung der Analogien von Spannung zu Temperatur und Strom zu Wärmestrom angeordnet werden. Das Ansteuerungsprotokoll geht beispielsweise in die Aktivierungssignale und Anfangsbedingungen für das Netzwerkmodell ein. Der Temperaturverlauf ist ein Rechenergebnis, das beim Berechnen des Netzwerkmodells erhalten wird. Die mathematische Form des im Netzwerkmodell abgebildeten Gleichungssystems ist durch Gleichung (3) gegeben:

$$
\begin{pmatrix} C_1 & \cdots & 0 \\ \vdots & \ddots & \vdots \\ 0 & \cdots & C_n \end{pmatrix}
\begin{pmatrix} \dot{T}_1 \\ \vdots \\ \dot{T}_n \end{pmatrix}
$$

$$
= \begin{pmatrix}
-\left(\dfrac{1}{R_{12}}+\cdots+\dfrac{1}{R_{1m}}\right) & \dfrac{1}{R_{12}} & \cdots & \cdots & \cdots & \dfrac{1}{R_{1m}} \\[2ex]
\dfrac{1}{R_{21}} & -\left(\dfrac{1}{R_{21}}+\dfrac{1}{R_{23}}+\cdots+\dfrac{1}{R_{2m}}\right) & \cdots & \cdots & \cdots & \dfrac{1}{R_{2m}} \\[2ex]
\vdots & \vdots & \cdots & \cdots & \cdots & \vdots \\[2ex]
\dfrac{1}{R_{n1}} & \dfrac{1}{R_{n2}} & \cdots & -\left(\dfrac{1}{R_{n1}}+\cdots+\dfrac{1}{R_{nm}}\right) & \cdots & \dfrac{1}{R_{nm}}
\end{pmatrix}
\begin{pmatrix} T_1 \\ \vdots \\ T_m \end{pmatrix}
\qquad (3)
$$

Es handelt sich um ein lineares, gewöhnliches Differentialgleichungssystem erster Ordnung für die Temperaturen $T_i$ an verschiedenen Orten i im mikrofluidischen System 100 oder in der Kartusche. Die auftretenden Parameter sind die Wärmekapazitäten $C_i = (c_p \rho V)_i$ mit der spezifischen Wärmekapazität des Materials in der Umgebung des Punktes *i*, der Dichte des Materials $\rho$ und dem Volumen *V*, das dem Punkt i zugeordnet ist. Des Weiteren bedeuten die $R_{ij} = \dfrac{l_{ij}}{\lambda_{ij} A_{ij}}$ die thermischen Widerstände zwischen den Punkten *i,j*, wobei *l* den Punktabstand, $\lambda_{ij}$ die Wärmeleitfähigkeit des Materials zwischen den Punkten *i,j* und $A_{ij}$ die Kontaktfläche zwischen den Volumina, die den Punkten *i,j* zugeordnet sind, bezeichnen. Die Temperaturen $T_{n+1}$ bis $T_m$ entsprechen den vorgegebenen Heizertemperaturen.

Es kann vorgesehen sein, dass das Modell 206 ein datenbasiertes Modell umfasst, das durch Trainingsdaten aus dem 3D-Modell oder experimentellen Temperaturmessungen trainiert wird die erste Temperatur abhängig vom Ansteuerungsprotokoll vorherzusagen. Das datenbasierte Modell ist z.B. ein künstliches neuronales feedforward Netzwerk. Das datenbasierte Modell ist z.B. ausgebildet, für jeden Zeitpunkt anhand der aktuellen Temperaturzustände deren zeitliche Änderung vorherzusagen.

Es kann auch eine Kombination dieser Modelle vorgesehen sein.

Eine Kombination aus verschiedenen Modellen wird z.B. dann verwendet, wenn ein einzelnes Modell nicht alle relevanten Zusammenhänge hinreichend genau abbildet. Dann modellieren einzelne Modelle je Teile der relevanten Zusammenhänge.

Zum Beispiel werden Bewegungen des Fluids mit dem 3D-Modell und thermischen Effekte im Festkörper des mikrofluidischen Systems 100 oder der Kartusche mit dem Netzwerkmodell bestimmt. Dadurch wird der Rechenaufwand reduziert.

Es kann vorgesehen sein, dass unbekannte Materialparameter mit einem datenbasierten Modell abhängig von Trainingsdaten aus Experimenten ermittelt und in einem der anderen Modelle, d.h. dem 3D-Modell oder dem Netzwerkmodell, genutzt werden.

Das Netzwerkmodell und das datenbasierte Modell hat den Vorteil eines gegenüber dem 3D-Modell für dieselbe Berechnung geringen Rechenaufwands bei der Auswertung. Dies beschleunigt die beschriebenen Parametervariationen. Das Netzwerkmodell kann unabhängig vom 3D-Modell erstellt werden. Das Netzwerkmodell ist dem 3D-Modell jedoch an Genauigkeit unterlegen. Eine Genauigkeit des datenbasierten Modells hängt von einer Genauigkeit der im Training benutzen Daten ab.

Beispielsweise werde die vom 3D-Modell und/oder vom Netzwerkmodell berechneten Zeitreihen zusammen mit den Ansteuerungssignalen für eine datenbasierte Systemidentifikation genutzt.

Für thermische Effekte wird z.B. ein Zeitverhalten der Temperatur im Fluid bei fester Fluidposition mit ausreichender Genauigkeit durch ein zeitinvariantes, lineares System gewöhnlicher Differentialgleichungen beschrieben.

Ein Wechsel der Verweilkammern, d.h. eine Bewegung des Fluids von einer der Kammern in eine andere der Kammern, kann entweder durch zeitabhängige Koeffizienten dieses Systems oder durch einen diskreten oder kontinuierlichen Wechsel zwischen mehreren Gleichungssystemen abgebildet. Jedes der letzteren Gleichungssysteme entspricht einer Fluidposition/-konfiguration.

Die berechneten Zeitreihen stellen die Trainingsdaten dar. Mit den Trainingsdaten werden im Beispiel die Koeffizienten der linearen Differentialgleichungen dadurch ermittelt, dass ein Fehler zwischen einer vorhergesagten Systemantwort und einer von den Trainingsdaten beschriebenen Systemantwort minimiert wird.

Dazu wird z.B. eine von folgenden mehreren Möglichkeiten verwendet: die Methode der kleinsten Fehlerquadrate über alle Datenpunkte der Trainingsdaten, das Trainieren eines die Systemkoeffizienten enthaltenden neuronalen Netzwerks.

Es kann zudem vorgesehen sein, einen Trainingserfolg zusätzlich zur Wiedergabe der Trainingsdaten anhand vorausberechneter Systemantworten zu bewerten.

Die Zielvorgabe ist in einem Beispiel eine Zielfunktion, die Zielintervalle, d.h. Soll-Zeitintervalle und Soll-Temperaturintervalle definiert. Die beschriebenen Modelle liefern Zeitreihen, z.B. eine Fluidtemperatur als Funktion der Zeit. Diese Zeitreihen werden im Beispiel mit der Zielfunktion abgeglichen. Beispielsweise werden diejenigen Ist-Zeitintervalle ermittelt, in denen die Fluidtemperatur sich ein einem dem jeweiligen Soll-Zeitintervall zugeordneten Soll-Temperaturintervall befindet. Hierzu wird die Zeitreihe beginnend von vorn durchlaufen und für jeden Zeitpunkt überprüft, ob und wenn ja, in welchem Soll-Temperaturintervall die Temperatur liegt. Liegt ein Temperaturwert der Temperatur in dem diesem Soll-Zeitintervall zugeordneten Temperaturintervall, so werden die Temperaturwerte zu folgenden Zeitpunkten so lange zu einem Ist-Zeitintervall hinzugerechnet, wie sie durchgehend im selben Soll-Temperaturintervall liegen, ansonsten wird das Ist-Zeitintervall beendet. Die Ist-Zeitintervalllänge wird abhängig von einer Differenz von End- und Anfangszeitpunkten derjenigen Temperaturwerte, die im Soll-Temperaturintervall lagen, bestimmt. Die Reihenfolge von Ist-Zeitintervallen und die Ist-Zeitintervalllängen werden im Beispiel mit den Soll-Zeitintervallen und deren Soll-Zeitintervalllänge verglichen. Bei einer Abweichung zwischen diesen, werden Korrekturen der Parameter des Ansteuerungsprotokolls vorgenommen.

Dieser Vorgang wird im Beispiel wiederholt ausgeführt.

In diesem Vorgang bestimmt entweder ein Experte oder ein Algorithmus die Parameter mit dem Ziel die Abweichung zu minimieren.

Mittels geeigneter Zielfunktionen kann zudem eine zeitoptimale Lösung, d.h. ein schneller Ablauf, erzielt werden.

Beispiele für den Algorithmus sind im Folgenden angegeben. Die Algorithmen unterscheiden sich hinsichtlich des untersuchten Lösungsraums und/oder in der Güte der gefundenen Lösung.

Random Search: Durch zufallsbasiertes Abtasten des Parameterraums wird eine Lösung gefunden, die ein Abbruchkriterium, im Beispiel die Zielvorgabe, erfüllt.

Bayessche Optimierung: Der Einfluss der Parameter auf die Zielfunktion wird durch einen lernenden Algorithmus abgetastet, gelernt und für das Vorschlagen der besten Lösung genutzt. Neue Parametersätze werden dabei basierend auf der gelernten Wahrscheinlichkeitsverteilung und einer heuristischen Funktion, z.B. der Acquisition Function, erzeugt. Dazu wird z.B. das aktuell vermutete Optimum verwendet.

Modellprädiktive Regelung: Während der Lösung eines Differentialgleichungssystems, das das Modell 206 umfasst, werden die Steuerungsparameter dynamisch angepasst, indem ein gewisser Zeitraum in die Zukunft vorberechnet und die Auswirkung der Parameter basierend darauf bewertet wird.

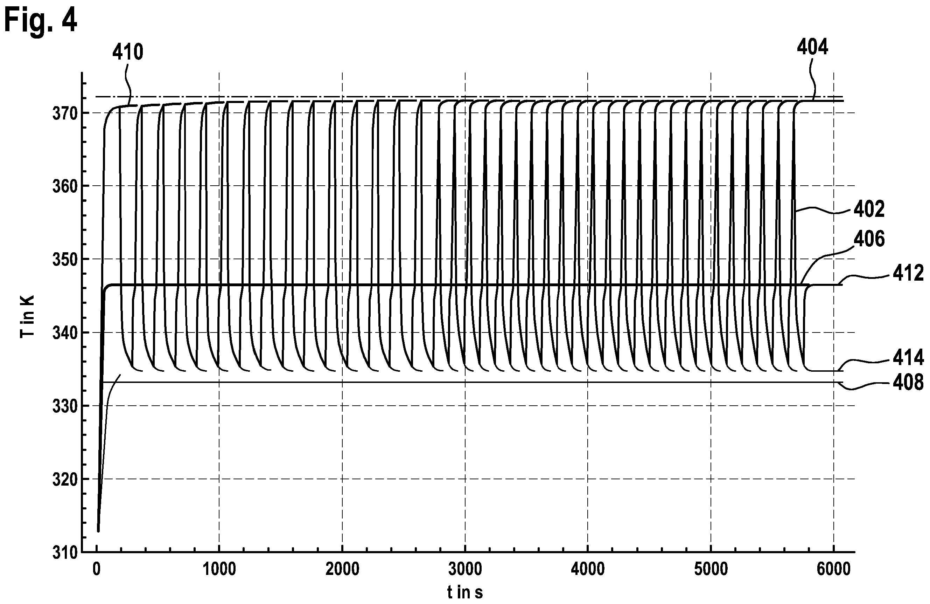

In Figur 4 ist ein beispielhafter Temperaturverlauf im Fluid 402 unter dem Einfluss eines ersten Temperaturverlaufs 404 in der ersten Kammer 102, eines zweiten Temperaturverlaufs 406 in der zweiten Kammer 104 und eines dritten Temperaturverlaufs 408 in der dritten Kammer 106 über der Zeit dargestellt, beispielsweise für die Durchführung einer Polymerase-Kettenreaktion mit drei verschiedenen Temperaturniveaus. Durch eine Fluidbewegung zwischen den Kammern aufgrund des Ansteuerungsprotokolls befindet sich das Fluid im Verlauf der Zeit in unterschiedlichen Kammern. Eine vom Modell 206 vorhergesagte erste Fluidtemperatur 410 für die erste Kammer 102, eine vom Modell 206 vorhergesagte zweite Fluidtemperatur 412 für die zweite Kammer 104 und eine vom Modell 206 vorhergesagte dritte Fluidtemperatur 414 für die dritte Kammer 106 sind in Figur 4 jeweils als Kurvenabschnitte dargestellt. Das Fluid erwärmt sich während des Verweilens in der ersten Kammer 102 gemäß der vorhergesagten ersten Fluidtemperatur 410 und kühlt während des Verweilens in der dritte Kammer 106 gemäß der vorhergesagten dritten Fluidtemperatur 414 ab, da eine Temperatur in der dritten Kammer 106 im

Beispiel geringer ist als eine Temperatur in der ersten Kammer 102. Die vom Modell 206 vorhergesagte erste Fluidtemperatur 410 weicht nach Erreichen einer maximalen Temperatur im Temperaturverlauf 402 von diesem ab. Die vom Modell 206 vorhergesagte dritte Fluidtemperatur 414 weicht nach Erreichen einer minimalen Temperatur im Temperaturverlauf 402 von diesem ab. Im Beispiel verweilt das Fluid auch in der zweiten Kammer 104, wobei die Temperatur in der zweiten Kammer 104 zwischen der Temperatur in der dritten Kammer 106 und der Temperatur in der ersten Kammer 104 liegt. Das Fluid erreicht im Beispiel am Ende des Temperaturverlaufs 402, beim Verweilen in der zweiten Kammer 104, die vorhergesagte zweite Fluidtemperatur 412, im Beispiel die Temperatur, mit der die zweite Kammer 104 geheizt wird.

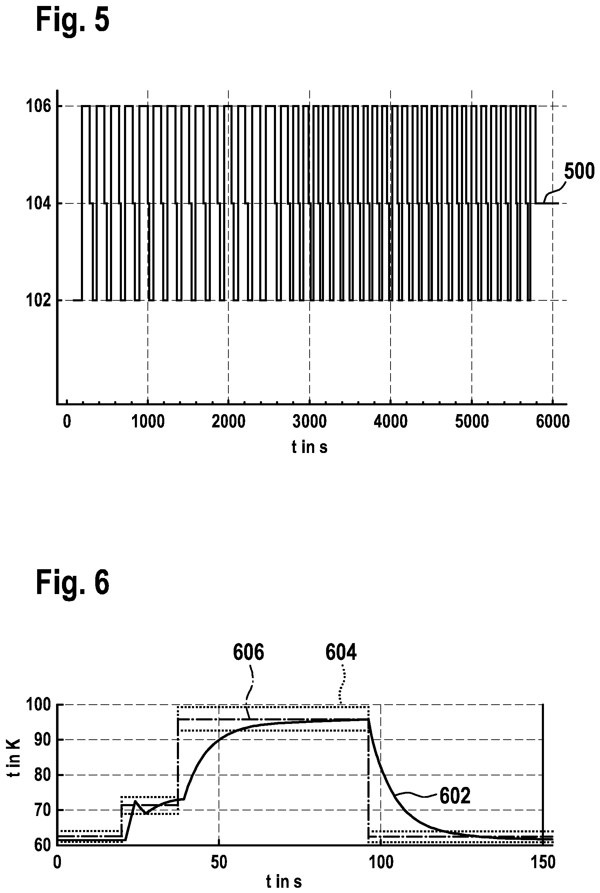

In Figur 5 ist eine beispielhafte Ablaufsteuerung 500 über der Zeit schematisch dargestellt. Die Ablaufsteuerung 500 erfolgt im Beispiel mit dem Ansteuerungsprotokoll bei dem das Fluid abwechselnd in der ersten Kammer 102 und der dritten Kammer 106 sowie jeweils dazwischen in der zweiten Kammer 104 verweilt, wobei sich das Fluid am Ende in der zweiten Kammer 104 befindet und sich der Temperaturverlauf im Fluid 402 einstellt.

In Figur 6 ist für eine Simulationszeit von 150 Sekunden ein Verlauf einer Fluidtemperatur 602 mit einem Temperaturzielkorridor 604 und eine Zielvorgabe 606 für eine Beispielrechnung mit einer Bayesschen Optimierung dargestellt. Der Temperaturzielkorridor ist im Beispiel durch die Temperaturgrenzen vorgegeben.

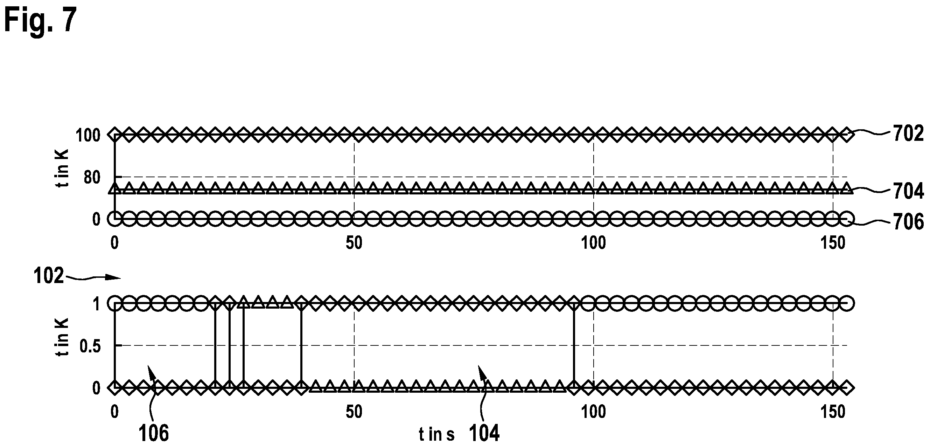

In Figur 7 ist ein Verlauf von Temperaturen und Verweildauern des Fluids in der Beispielrechnung dargestellt. Im oberen Graphen ist ein Verlauf einer ersten Temperatur 702 des ersten Heizelements 108, ein Verlauf einer zweiten Temperatur 704 des zweiten Heizelements 110 und ein Verlauf einer dritten Temperatur 706 des dritten Heizelements 112 über der Zeit dargestellt. Im unteren Graphen ist für die erste Kammer 102, die zweite Kammer 104 und die dritte Kammer 106 mit einem Wert von 1 angegeben, ob das Fluid in dieser Kammer verweilt. Ein Wert von 0 bedeutet, das Fluid ist nicht in der jeweiligen Kammer.

Die Beispielrechnung sieht vor, dass die Temperaturen der Heizelemente anfangs zufallsbasiert festgelegt und dann während der Beispielrechnung konstant gehalten werden. Im Beispiel wird die Fluidposition innerhalb der Simulationszeit von 150 s geändert, je nachdem, ob sich die Fluidtemperatur im Zielkorridor befindet oder nicht. Ein Kammerwechsel findet im Beispiel statt, sobald sich das Fluid lange genug, d.h. die durch die Zielvorgabe definierte Zeit, in einem Temperaturzielkorridor befunden hat.

Das Ansteuerungsprotokoll mit dem sich dieser Temperaturverlauf einstellt wird z.B. für mikrofluidische Lab-on-Chip-Systeme zur medizinischen Diagnostik, insbesondere zum Ablauf biochemischer Prozessierung mittels Temperaturverläufen, verwendet.

**Patentansprüche**

1. Computergestütztes Verfahren zum Bestimmen eines Ansteuerungsprotokolls für ein mikrofluidisches System (100) unter Temperatureinflüssen, wobei das mikrofluidische System (100) eine erste Kammer (102) für ein Fluid umfasst, wobei das mikrofluidische System (100) ein erstes Heizelement (108) umfasst, das ausgebildet ist, eine Temperatur des Fluids in der ersten Kammer (102) zu beeinflussen, wobei ein mit einem Parametersatz parametrierbares Modell (206) bereitgestellt wird (302), das ausgebildet ist, einen Einfluss einer ersten Temperatur und einen Einfluss einer zweiten Temperatur auf einen Temperaturverlauf im Fluid im mikrofluidischen System zu bestimmen, wenn dieses gemäß des Ansteuerungsprotokolls angesteuert wird, wobei eine Zielvorgabe für den Temperaturverlauf bereitgestellt wird (304), wobei der Parametersatz bestimmt wird (306), bei dem ein mit dem Modell (206) berechneter Temperaturverlauf die Zielvorgabe erfüllt, wobei der Parametersatz wenigstens einen Parameter des Ansteuerungsprotokolls umfasst, der die erste Temperatur und/oder die zweite Temperatur vorgibt, **dadurch gekennzeichnet, dass** wenigstens ein Parameter des Parametersatzes bestimmt wird (306), der im Ansteuerungsprotokoll eine Geometrie wenigstens einer Kammer des mikrofluidischen Systems mit veränderbarer Geometrie und/oder wenigstens eine Position wenigstens eines Heizelementes des mikrofluidischen Systems mit veränderbarer Position vorgibt.

2. Verfahren nach Anspruch 1, wobei das mikrofluidische System (100) eine zweite Kammer (104) für das Fluid umfasst, wobei das mikrofluidische System (100) ein zweites Heizelement (110) umfasst, das ausgebildet ist, die Temperatur des Fluids in der zweiten Kammer (104) zu beeinflussen, **dadurch gekennzeichnet, dass** das Modell (206) ausgebildet ist, einen Einfluss der ersten Temperatur des ersten Heizelements (108) und einen Einfluss der zweiten Temperatur des zweiten Heizelements (110) auf den Temperaturverlauf im Fluid im mikrofluidischen System zu bestimmen.

3. Verfahren nach Anspruch 2, **dadurch gekennzeichnet, dass** wenigstens ein Parameter des Parametersatzes bestimmt wird (306), der im Ansteuerungsprotokoll eine Reihenfolge vorgibt, in welcher die erste Kammer (102) und/oder die zweite Kammer (104) zum Beeinflussen der Temperatur des Fluids benutzt werden.

4. Verfahren nach einem der Ansprüche 2 oder 3, **dadurch gekennzeichnet, dass** wenigstens ein Parameter des Parametersatzes bestimmt wird (306), der im Ansteuerungsprotokoll eine Verweilzeit des Fluids in der ersten Kammer (102) und/oder eine Verweilzeit des Fluids in der zweiten Kammer (104) vorgibt.

**5.** Verfahren nach einem der vorhergehenden Ansprüche, **dadurch gekennzeichnet, dass** eine Mehrzahl Kandidaten für das Ansteuerungsprotokoll bestimmt wird (306), wobei der Kandidat als das Ansteuerungsprotokoll aus den Kandidaten ausgewählt wird (308), mit dem die Zielvorgabe schneller erreicht wird als mit wenigstens einem der anderen Kandidaten.

**6.** Verfahren nach einem der vorhergehenden Ansprüche, **dadurch gekennzeichnet, dass** wenigstens ein Parameter des Parametersatzes bestimmt wird (306), mit dem der Temperatureinfluss im mikrofluidischen Systems (100) bestimmt wird.

**7.** Verfahren zum Ansteuern eines mikrofluidischen Systems, **dadurch gekennzeichnet, dass** ein Ansteuerungsprotokoll für das mikrofluidische System in einem Verfahren nach einem der Ansprüche 1 bis 6 bestimmt wird, wobei das mikrofluidische System mit dem Ansteuerungsprotokoll angesteuert wird (310).

**8.** Verfahren nach Anspruch 7, **dadurch gekennzeichnet, dass** das mikrofluidische System (100) mit dem Ansteuerungsprotokoll angesteuert wird (310), die erste Temperatur am ersten Heizelement einzustellen und/oder die zweite Temperatur am zweiten Heizelement einzustellen.

**9.** Verfahren nach Anspruch 7 oder 8, **dadurch gekennzeichnet, dass** das mikrofluidische System (100) mit dem Ansteuerungsprotokoll angesteuert wird (310), das Fluid pneumatisch in wenigstens eine Kammer zu drücken oder zu saugen.

**10.** Verfahren nach einem der Ansprüche 6 bis 8, **dadurch gekennzeichnet, dass** das mikrofluidische System (100) mit dem Ansteuerungsprotokoll angesteuert wird (310), die Geometrie wenigstens einer Kammer zu verändern und/oder die Position und/oder die Temperatur wenigstens eines Heizelementes zu verändern.

**11.** Vorrichtung (200), **dadurch gekennzeichnet, dass** die Vorrichtung wenigstens einen Prozessor (202) und wenigstens einen Speicher (204) umfasst, die ausgebildet sind, das Verfahren nach einem der Ansprüche 1 bis 10 auszuführen.

**12.** Vorrichtung (200) nach Anspruch 11, **dadurch gekennzeichnet, dass** die Vorrichtung (200) das mikrofluidische System (100) umfasst.

**13.** Computerprogramm, **dadurch gekennzeichnet, dass** das Computerprogramm computerlesbare Instruktionen umfasst, bei deren Ausführung durch einen Computer das Verfahren nach einem der Ansprüche 1 bis 10 abläuft.

**Claims**

**1.** Computer-aided method for determining a control protocol for a microfluidic system (100) under the influence of temperature, the microfluidic system (100) comprising a first chamber (102) for a fluid, the microfluidic system (100) comprising a first heating element (108) designed to influence a temperature of the fluid in the first chamber (102), wherein a model (206) parameterizable with a parameter set is provided (302) that is designed to determine an influence of a first temperature and an influence of a second temperature on a temperature profile in the fluid in the microfluidic system when said microfluidic system is controlled according to the control protocol, wherein a target for the temperature profile is provided (304), wherein the parameter set for which a temperature profile calculated using the model (206) meets the target is determined (306), the parameter set comprising at least one parameter of the control protocol that specifies the first temperature and/or the second temperature, **characterized in that** at least one parameter of the parameter set is determined (306) that specifies in the control protocol a geometry of at least one chamber of the microfluidic system with a variable geometry and/or at least one position of at least one heating element of the microfluidic system with a variable position.

**2.** Method according to Claim 1, the microfluidic system (100) comprising a second chamber (104) for the fluid, the microfluidic system (100) comprising a second heating element (110) designed to influence the temperature of the fluid in the second chamber (104), **characterized in that** that the model (206) is designed to determine an influence of the first temperature of the first heating element (108) and an influence of the second temperature of the second heating element (110) on the temperature profile in the fluid in the microfluidic system.

**3.** Method according to Claim 2, **characterized in that** at least one parameter of the parameter set is determined (306) that specifies in the control protocol an order in which the first chamber (102) and/or the second chamber (104) are used to influence the temperature of the fluid.

**4.** Method according to either of Claims 2 and 3, **characterized in that** at least one parameter of the parameter set is determined (306) that specifies in the control protocol a residence time of the fluid in the first chamber (102) and/or a residence time of the fluid in the second chamber (104).

**5.** Method according to one of the preceding claims, **characterized in that** a plurality of candidates for the control protocol are determined (306), that candidate from the candidates that achieves the target faster than at least one of the other candidates being selected (308) as the control protocol.

**6.** Method according to one of the preceding claims, **characterized in that** at least one parameter of the parameter set that is used to determine the temperature influence in the microfluidic system (100) is determined (306).

**7.** Method for controlling a microfluidic system, **characterized in that** a control protocol for the microfluidic system is determined using a method according to one of Claims 1 to 6, the microfluidic system being controlled (310) with the control protocol.

**8.** Method according to Claim 7, **characterized in that** the microfluidic system (100) is controlled (310) with the control protocol to set the first temperature at the first heating element and/or the second temperature at the second heating element.

**9.** Method according to Claim 7 or 8, **characterized in that** the microfluidic system (100) is controlled (310) with the control protocol to push or suck the fluid pneumatically into at least one chamber.

**10.** Method according to one of Claims 6 to 8, **characterized in that** the microfluidic system (100) is controlled (310) with the control protocol to change the geometry of at least one chamber and/or to change the position and/or temperature of at least one heating element.

**11.** Device (200), **characterized in that** the device comprises at least one processor (202) and at least one memory (204), which are designed to carry out the method according to one of Claims 1 to 10.

**12.** Device (200) according to Claim **11, characterized in that** the device (200) comprises the microfluidic system (100).

**13.** Computer program, **characterized in that** the computer program comprises computer-readable instructions, execution of which by a computer results in the method according to one of Claims 1 to 10 taking place.

**Revendications**

**1.** Procédé assisté par ordinateur pour la détermination d'un protocole de commande pour un système microfluidique (100) sous des influences de température, le système microfluidique (100) comprenant une première chambre (102) pour un fluide, le système microfluidique (100) comprenant un premier élément chauffant (108) qui est conçu pour influencer une température du fluide dans la première chambre (102), un modèle (206) paramétrable par un jeu de paramètres étant mis à disposition (302), lequel modèle est conçu pour déterminer une influence d'une première température et une influence d'une seconde température sur une évolution de température dans le fluide dans le système microfluidique lorsque celui-ci est commandé selon le protocole de commande, une spécification cible pour l'évolution de température étant mise à disposition (304), un jeu de paramètres étant déterminé (306) dans lequel une évolution de température calculée à l'aide du modèle (206) répond à la spécification cible, le jeu de paramètres comprenant au moins un paramètre du protocole de commande, lequel paramètre spécifie la première température et/ou la seconde température, **caractérisé en ce qu'**au moins un paramètre du jeu de paramètres est déterminé (306), lequel paramètre spécifie, dans le protocole de commande, une géométrie d'au moins une chambre du système microfluidique présentant une géométrie modifiable et/ou au moins une position d'au moins un élément chauffant du système microfluidique présentant une position modifiable.

**2.** Procédé selon la revendication 1, dans lequel le système microfluidique (100) comprend une seconde chambre (104) pour le fluide, le système microfluidique (100) comprenant un second élément chauffant (110) qui est conçu pour influencer la température du fluide dans la seconde chambre (104), **caractérisé en ce que** le modèle (206) est conçu pour déterminer une influence de la première température du premier élément chauffant (108) et une influence de la seconde température du second élément chauffant (110) sur l'évolution de température dans le fluide dans le système microfluidique.

3. Procédé selon la revendication 2, **caractérisé en ce qu'**au moins un paramètre du jeu de paramètres est déterminé (306), lequel paramètre spécifie, dans le protocole de commande, un ordre dans lequel la première chambre (102) et/ou la seconde chambre (104) sont utilisées pour influencer la température du fluide.

4. Procédé selon l'une des revendications 2 à 3, **caractérisé en ce qu'**au moins un paramètre du jeu de paramètres est déterminé (306), lequel paramètre spécifie, dans le protocole de commande, une durée de séjour du fluide dans la première chambre (102) et/ou une durée de séjour du fluide dans la seconde chambre (104).

5. Procédé selon l'une des revendications précédentes, **caractérisé en ce qu'**une multitude de candidats pour le protocole de commande sont déterminés (306), le candidat qui est choisi comme protocole de commande parmi les candidats (308) étant celui par lequel la spécification cible est atteinte plus rapidement qu'avec au moins un autre des candidats.

6. Procédé selon l'une des revendications précédentes, **caractérisé en ce qu'**au moins un paramètre du jeu de paramètres est déterminé (306) par lequel l'influence de la température dans le système microfluidique (100) est déterminé.

7. Procédé de commande d'un système microfluidique, **caractérisé en ce qu'**un protocole de commande pour le système microfluidique est déterminé dans un procédé selon l'une des revendications 1 à 6, le système microfluidique étant commandé par le protocole de commande (310).

8. Procédé selon la revendication 7, **caractérisé en ce que** le système microfluidique (100) est commandé par le protocole de commande (310) afin de régler la première température au niveau du premier élément chauffant et/ou la seconde température au niveau du second élément chauffant.

9. Procédé selon la revendication 7 ou 8, **caractérisé en ce que** le système microfluidique (100) est commandé par le protocole de commande (310) afin de pousser ou d'aspirer le fluide pneumatiquement dans au moins une chambre.

10. Procédé selon l'une des revendications 6 à 8, **caractérisé en ce que** le système microfluidique (100) est commandé par le protocole de commande (310), afin de modifier la géométrie d'au moins une chambre et/ou afin de modifier la position et/ou la température d'au moins un élément chauffant.

11. Dispositif (200), **caractérisé en ce que** le dispositif comprend au moins un processeur (202) et au moins une mémoire (204) qui sont conçus pour exécuter le procédé selon l'une des revendications 1 à 10.

12. Dispositif (200) selon la revendication 11, **caractérisé en ce que** le dispositif (200) comprend le système microfluidique (100).

13. Programme informatique, **caractérisé en ce que** le programme informatique comprend des instructions lisibles par ordinateur, dont l'exécution par un ordinateur met en œuvre le procédé selon l'une des revendications 1 à 10.

# Fig. 1

# Fig. 2

# Fig. 3

# Fig. 4

## Fig. 5

## Fig. 6

# Fig. 7

EP 4 473 375 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020116398 A1
- DE 102016222075 A1
- DE 102016222072 A1

**In der Beschreibung aufgeführte Nicht-Patentliteratur**

- Micro-assembled multi-chamber thermal cycler for low-cost reaction chip thermal multiplexing. **ZOU Q et al.** SENSORS AND ACTUATORS A: PHYSICAL. ELSEVIER BV, 01 December 2002, vol. 102, 114-121